(19) Europäisches Patentamt
European Patent Office
Office européen des brevets

(11) **EP 4 102 316 B1**

(12) **EUROPÄISCHE PATENTSCHRIFT**

(45) Veröffentlichungstag und Bekanntmachung des Hinweises auf die Patenterteilung:
**06.12.2023 Patentblatt 2023/49**

(21) Anmeldenummer: **22177181.9**

(22) Anmeldetag: **03.06.2022**

(51) Internationale Patentklassifikation (IPC):
**G05B 19/18** (2006.01)      **B23K 9/20** (2006.01)
**G05B 19/19** (2006.01)      **B21J 5/06** (2006.01)
**B23P 19/06** (2006.01)

(52) Gemeinsame Patentklassifikation (CPC):
**G05B 19/19; B21J 5/066; B23P 19/066;**
**G05B 19/186;** G05B 2219/41109;
G05B 2219/45203; G05B 2219/45219;
G05B 2219/49333

(54) **VERFAHREN UND VORRICHTUNG ZUR ÜBERWACHUNG UND/ODER REGELUNG EINES FLIESSLOCH- UND GEWINDEFORMPROZESSES**

METHOD AND DEVICE FOR MONITORING AND / OR REGULATING A FLOW HOLE AND THREAD-FORMING PROCESS

PROCÉDÉ ET DISPOSITIF DE SURVEILLANCE ET/OU DE RÉGULATION D'UN PROCESSUS DE FORMATION DE FLUO-PERÇAGE ET DE FILETAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2021 DE 102021115210**

(43) Veröffentlichungstag der Anmeldung:
**14.12.2022 Patentblatt 2022/50**

(73) Patentinhaber: **Atlas Copco IAS GmbH**
**75015 Bretten (DE)**

(72) Erfinder:
• **Ludsteck, Michael**
**81669 München (DE)**
• **Guglhör, Manuel**
**83671 Benediktbeuren (DE)**

(74) Vertreter: **Mischung, Ralf**
**Eder Schieschke & Partner mbB**
**Patentanwälte**
**Elisabethstraße 34/II**
**80796 München (DE)**

(56) Entgegenhaltungen:
GB-A- 2 436 027      JP-A- 2006 123 123
US-A1- 2014 360 322

**Beschreibung**

Die vorliegende Erfindung betrifft ein Verfahren und eine Vorrichtung für ein Fügeverfahren, insbesondere einen Fließloch- und Gewindeformprozess, der im Weiteren vereinfacht auch als "Schraubprozess" oder "Fügeprozess" bezeichnet werden kann. Dabei wird ein Füge-Element in mehreren unmittelbar aufeinanderfolgenden Prozessschritten in ein Werkstück eingebracht, wobei unter "Werkstück" in der Regel zwei miteinander zu verbindende und aneinanderliegende Elemente verstanden werden sollen.

Das Fügeelement kann insbesondere eine Fließlochschraube sein. Vergleichbare Elemente werden auch als "Flowpush-Elemente" oder "Fließloch-formende Einpressbolzen" bezeichnet. Die nachfolgenden Ausführungen beziehen sich daher stellvertretend für den allgemeineren Begriff "*Füge-Element*" in vereinfachter Terminologie auf die konkrete Ausführungsform des Füge-Elements als "Fließlochschraube" oder einfach nur "Schraube".

Bei dem an sich bekannten Fügeprozess mit einer Fließlochschraube wird die Schraube zunächst mit ihrer Spitze voraus auf das Werkstück aufgesetzt (Finden). Anschließend wird die Drehzahl erhöht und die Schraube mit hoher Andruckkraft gegen das Werkstück gedrückt, wobei sich das Werkstückmaterial erwärmt und zu fließen beginnt. Unter hoher Andruckkraft und mit schnell abnehmender Drehzahl wird die Schraube dann bis zum Beginn des Gewindeabschnitts in das Werkstück gedrückt (Durchzugformen). Mit deutlich reduzierter Drehzahl wird die Schraube dann in das Werkstück eingedreht und formt dabei darin ein Gewinde (Gewindeformen). Schließlich wird die Schraube bis zur Kopfauflage in das Werkstück eingedreht und angezogen (Endanzug).

Der Übergang von einem in den anderen Prozessschritt muss genau kontrolliert werden und gezielt erfolgen. Beispielsweise muss der Übergang vom Durchzugformen zum Gewindeformen genau detektiert werden. Denn insbesondere die Drehzahl (aber auch andere Parameter wie etwa die Andruckkraft und/oder der Vorschub) müssen dabei geändert werden, um einerseits erst bei ausreichender Eindringtiefe mit dem Gewindeformen zu beginnen und andererseits nicht mit zu hoher Drehzahl zu tief einzudringen, um die saubere Ausbildung des Gewindes entsprechend seiner Steigung nicht zu gefährden. Allerdings muss der Übergang nicht einem bestimmten Zeitpunkt im Sinne eines plötzlich auftretenden Ereignisses zugeordnet werden. Stattdessen kann das Durchzugformen auch in einem stetigen, durch regelndes oder steuerndes Verhalten kontrollierten Prozess in das Gewindeformen übergehen. Gleiches gilt auch für den Übergang zwischen anderen Prozessschritten im Fließloch-Schraubprozess. Im Stand der Technik wird ein Umschaltzeitpunkt beispielsweise durch Erfassen der Eindringtiefe ermittelt. Dabei wird davon ausgegangen, dass das Durchzugformen immer dann abgeschlossen ist, wenn beispielsweise der Abstand des Schraubenkopfs zur Werkstückoberfläche ein vorgegebenes Maß unterschreitet. Dabei bleiben jedoch Toleranzen der Werkstückdicke unberücksichtigt. Durchdringt die Schraube das Werkstück zu früh, so greift der gewindeformende Teil der Schraube mit zu hoher Drehzahl und Prozesskraft in das Werkstück und zerstört dadurch gegebenenfalls das Gewinde.

Alternativ ist aus der DE 10 2007 024 627 B3 bekannt, den Gradienten der Eindringtiefe als Umschaltkriterium heranzuziehen. Dabei wird beispielsweise die Eindringtiefe pro Zeit überwacht. In dem Moment, in dem das Material des Werkstücks zu fließen beginnt, dringt die Schraube in das Werkstück ein. Für den dabei ansteigenden Gradienten "Eindringtiefe pro Zeit" kann das Überschreiten eines vorgebbaren Schwellwertes als Umschaltkriterium verwendet werden.

Aus der JP 2006 123123 A ist eine automatische Schraubvorrichtung bekannt, die mit einem zugehörigen Verfahren dazu ausgebildet ist, eine Schraube in ein Werkstück einzuschrauben. Dabei wird ein Tiefpassfilter eingesetzt, um im Moment des Endanzug auftretende Schwingungen auszublenden, so dass das reine Anzugsmoment erfasst werden kann.

Aufgabe der Erfindung ist es, eine alternative Lösung zur Steuerung und Regelung des Fügeprozesses anzubieten, die auf der Beobachtung von Prozessdaten basiert.

Die Aufgabe wird gelöst durch ein Verfahren nach Anspruch 1 und eine Vorrichtung nach Anspruch 8.

Die Erfindung geht von der Überlegung aus, den Fügeprozess bzw. die Einleitung der einzelnen Prozessschritte zu regeln bzw. zu steuern auf der Basis eines im Prozess auftretenden Prozessparameters R und seines geglätteten Wertes R*. Die aus den Werten des Prozessparameters R gewonnenen geglätteten Werte R* gestatten eine Prognose für die zu erwartenden weiteren Werte des Prozessparameters R. Jedem Wert R(t) des Prozessparameters R kann daher ein zu erwartender geglätteter Wert R*(t) zugeordnet werden. In Abhängigkeit des gewählten Glättungsverfahrens und der dabei verwendeten Faktoren liegen die Werte R(t) und R*(t) mehr oder weniger nahe beieinander. Der wahre Prozessparameter R läuft dem geglätteten Prozessparameter R* dabei voraus, während der die Prognose darstellende Verlauf des geglätteten Wertes R* auf Basis des jeweils nächsten erfassten wahren Wertes des Prozessparameters R entsprechend permanent korrigiert wird. Der Abstand beider Werte zueinander wird durch die Differenz D(t) = R(t) - R*(t) beschrieben.

Eine plötzliche Änderung des Prozessparameter-Wertes R zum Zeitpunkt t führt daher dazu, dass der wahre Wert R(t) von dem für diesen Zeitpunkt prognostizierten geglätteten Wert R*(t) stärker abweicht, als dies für einen sich nur allmählich verändernden Prozessparameter R zu erwarten wäre, sodass die Abweichung bzw. Differenz D(t) groß wird. Diese Differenz D(t) soll erfindungsgemäß überwacht und als Umschaltkriterium verwendet werden, beispielsweise aus dem Vergleich mit einem vorgebbaren Schwellwert. Anders als im Stand der Technik wird daher erfindungsgemäß nicht der Gradient eines Prozessparameters überwacht, um daraus ein Umschaltkriterium abzuleiten. Stattdessen wird der Vergleich zwischen einem Prozessparameter und seinem geglätteten Wert verwendet, um anschließend Einfluss auf das Verfahren zu nehmen, indem beispielsweise ein Prozessparameter verändert wird.

Alternativ ist es auch denkbar, anstelle der Differenz zwischen dem Prozessparameter und seinem geglätteten Wert ausschließlich den Verlauf der geglätteten Kurve zu betrachten, und beispielsweise deren Gradient als Umschaltkriterium auszuwerten. Durch ein geeignet gewähltes Glättungsverfahren kann die Glättungskurve dem wahren Verlauf des Parameters möglichst eng angeglichen werden, ohne dessen einzelne Schwankungen oder Ausreißer mit abzubilden. Ein über einem Schwellwert liegender Gradient der geglätteten Kurve könnte somit ebenfalls als Umschaltkriterium ausgewertet werden.

Die Berechnung des geglätteten Wertes R* kann nach unterschiedlichen Vorgaben erfolgen. Insbesondere kann es sich um eine exponentielle Glättung handeln, die nach erster oder einer höheren Ordnung berechnet werden kann. Empirisch ermittelte Erfahrungswerte oder einzelne, bestimmte Prozesse charakterisierende Faktoren oder Beiwerte können in die Berechnung der Glättung einfließen. Dabei obliegt es dem Fachmann, das für den jeweiligen Prozessparameter geeignete Glättungsverfahren und geeignete Korrekturwerte mit einzuberechnen.

Grundsätzlich lässt sich die Differenz D(t) für unterschiedliche Prozessparameter und deren geglätteten Wert bilden. Die Auswertung der Differenz kann dazu verwendet werden, einen oder mehrere Prozessparameter zu verändern. Bei dem zu verändernden Prozessparameter kann es sich um den in die Differenz einfließenden Prozessparameter R selbst handeln. Denkbar ist jedoch auch, in Abhängigkeit der für einen bestimmten Prozessparameter R gebildeten Differenz andere Prozessparameter (M, N, F...) zu verändern. Der Prozessparameter R kann dabei auch gebildet werden als Verknüpfung mehrerer Prozessparameter, beispielsweise als deren Summe oder Produkt.

Die Auswertung der Differenz bzw. ein daraus resultierender Einfluss auf einen Prozessparameter kann auf zeitlich begrenzte Abschnitte des Fließlochschraubverfahrens beschränkt werden. So ist es beispielsweise denkbar, während der angestrebten Zunahme der Drehzahl zu Beginn des Schraubvorgangs (beispielsweise für etwa 100 ms) keine Auswertung der die Drehzahl als Prozessparameter betreffenden Differenz D vorzunehmen, um das Erreichen einer Mindestdrehzahl sicherzustellen. Nach Erreichen einer Mindestdrehzahl und/oder nach Ablauf einer beispielsweise empirisch ermittelten Mindestdauer kann die Überwachung der Differenz zugeschaltet werden. Alternativ könnte beispielsweise erst nach dem Eindringen der Schraube in das Werkstück der Verlauf des (dann als Prozessparameter R dienenden) Drehmoments M(t) mit seiner geglätteten Kurve M*(t) verglichen werden, um Schwankungen im Drehmomentverlauf auszublenden und erst bei Erreichen eines vorgebbar geglätteten Drehmomentwertes M* den Endanzug zu beenden.

Das erfindungsgemäße Verfahren umfasst die Merkmale nach Anspruch 1. Im Rahmen dessen sieht eine Ausführungsform des erfindungsgemäßen Verfahrens zweckmäßigerweise vor, den erfassten und geglätteten Prozessparameter zu bilden mit der Drehzahl N und/oder dem Drehmoment M und/oder der Vorschubkraft F und/oder der Eindringtiefe Z, vorzugsweise nach der Bedingung

$$R \sim (M \cdot N) / (Z + \beta),$$

wobei

M     das in die Schraube eingebrachte Drehmoment (beispielsweise erfasst durch einen Drehmomentsensor oder über Motordaten)

N     die Drehzahl der Schraube (beispielsweise erfasst durch einen Resolver am Motor oder einen Sensor)

Z     die Eindringtiefe der Schraube in das Bauteil (gemessen durch Weg-Messsysteme oder Sensoren) und

β     einen vorgebbaren Summanden, der beispielsweise eine Länge, beispielweise in Millimetern beschreibt und auch zu Null gewählt werden könnte,

repräsentiert. Das Produkt aus Drehmoment M und Drehzahl N entspricht der Leistung P.

Beispielsweise kann für einen der genannten Prozessparameter R die dem Fachmann bekannte exponentielle Glättung erster Ordnung angewandt werden nach der bekannten allgemeinen Formel

$$R^*{}_{(t)} = a \cdot R_{(t)} + (1- a) \cdot R^*{}_{(t-1)}$$

mit einem Glättungsfaktor a zwischen 0 und 1, beispielsweise könnte ein Glättungsfaktor gewählt werden zu a = 0,1.

Zweckmäßigerweise ist das erfindungsgemäße Verfahren so ausgebildet, dass die Drehzahl N und/oder die Vorschubkraft F automatisch verändert wird, wenn die Differenz D(t) einen vorgegebenen Schwellwert S übersteigt.

Beispielsweise kann vorgesehen sein, einen die Leistung und die Eindringtiefe berücksichtigenden Prozessparameter R und seinen geglätteten Wert R* zur Bildung der Differenz D(t) = R(t) - R*(t) heranzuziehen. Da die Leistung pro Eindringtiefe in dem Moment fällt, in dem das Material des Werkstücks zu fließen beginnt bzw. die Elementspitze das Werkstück durchdrungen hat (und damit der Prozessabschnitt des Durchzugformens beendet werden muss), wird die Differenz D(t) in diesem Moment groß bzw. größer als ein vorgegebener Schwellwert S. Wird dies detektiert und die Drehzahl N daraufhin reduziert, kann das Verfahren in den Prozessabschnitt des Gewindeformens übergehen und die Schraube mit reduzierter Drehzahl sowie reduzierter Kraft bei zunehmender Eindringtiefe in das Werkstück eingeschraubt werden.

(Der Vergleich "größer" oder "kleiner" kann sich dabei auf den Betrag der Differenz oder ihren absoluten Wert beziehen, ebenso wie dies für den Schwellwert S gilt. Wird der Betrag der Differenz D mit dem Betrag eines Schwellwertes S verglichen, so werden positive wie negative Abweichungen des Prozessparameters R von seinem geglätteten Wert R*, die größer als der Betrag des Schwellwertes sind, als Umschaltkriterium interpretiert. Eine besonders bevorzugte Ausführungsform des Verfahrens sieht jedoch vor, dass nur eine Abweichung in eine der beiden Richtungen (positiv oder negativ) das Umschaltkriterium erfüllt. Soll beispielsweise der Fall erkannt werden, bei dem die als Prozessparameter R überwachte Drehzahl N um ein bestimmtes Maß unter ihren geglätteten Wert R* fällt und daher die Differenz (R(t) - R*(t) entsprechend negativ ausfällt, dann ist der zum Vergleich heranzuziehende Schwellwert S, je nach Rechenoperation des Vergleichs, vorzugsweise auch negativ zu wählen.)

Das erfindungsgemäße Verfahren zeichnet sich dadurch aus, dass der optimale Umschaltzeitpunkt vorteilhafterweise ermittelt werden kann unabhängig von der Schraubengeometrie (Durchmesser, Länge, Gewindesteigung), von Material oder Schwankungen in der Materialqualität, von Dicke und Kombination der Fügeverbindung (zu verbindende Elemente), von der Vorschubkraft F und von Lage, Ausrichtung und Montage des Schraubers, der die Schraube zum Einschrauben beaufschlagt.

Nach einer weiteren Ausführungsform des Verfahrens ist vorgesehen, dass der Schwellwert S gebildet wird unter Berücksichtigung eines zuvor erreichten maximalen Wertes $R^*_{max}$ des geglätteten Parameterverlaufs R* und eines vorgebbaren Prozesswertes $\alpha$, vorzugsweise nach der Bedingung

$$S = R^*_{max} / \alpha$$

($\alpha$ kann beispielsweise eine reelle Zahl sein, die für den Prozess konstant vorgegeben oder aus anderen konstanten oder variablen Prozesswerten abgeleitet wird)

Dadurch wird der Schwellwert S in Abhängigkeit von bzw. proportional zu einer erst im Prozess auftretenden und vorher unbekannten maximalen Größe $R^*_{max}$ des geglätteten Wertes festgelegt. Größere absolute Werte der maximalen Größe $R^*_{max}$ führen dann auch zu einem entsprechend großzügiger bemessenen Schwellwert S, so dass die für die Umschaltung herangezogene Differenz D(t) mit einem dynamisch ermittelten Schwellwert verglichen wird. Dies gestattet eine dynamische Anpassung an im Prozess auftretende Betriebsbedingungen, und das Umschaltkriterium bzw. der Schwellwert S muss nicht starr vorher festgelegt sein. Dies ist vorteilhaft, da die benötigte Energie bis zum Durchdringungszeitpunkt der Schraube je nach Materialpaarung stark variieren kann. Ein beispielhafter Wert als Schwellwert S liegt bei 5,5 N/s.

Vorzugsweise umfasst das erfindungsgemäße Verfahren die folgenden Verfahrensschritte:

a) Beaufschlagen einer Fließlochschraube mit einer Drehzahl N und einer Vorschubkraft F und einem daraus resultierenden Drehmoment M, um die Schraube in bzw. durch ein Werkstück zu treiben;

b) Erfassen eines Prozessparameters R(t), welcher die Leistung P, mit der die Fließlochschraube beaufschlagt wird, auf die Eindringtiefe Z bezieht, um welche die Schraube dabei in das Werkstück eindringt, wobei die Leistung P repräsentiert wird durch das Produkt aus Drehzahl N und Drehmoment M, so dass der Prozessparameter R(t) der Bedingung

$$R(t) \sim P(t) / Z \text{ genügt, mit } P(t) = N(t) \cdot M(t) \text{ genügt}$$

c) Ermittlung des geglätteten Verlaufs R*(t) des Prozessparameters R

d) Vergleich der Differenz D(t) aus dem Prozessparameter R(t) und seinem geglätteten Verlauf R*(t) mit einem Schwellwert S, um dadurch den Zeitpunkt zu ermitteln, zu dem ein vorderster Abschnitt der Schraube in das Werkstück eindringt bzw. dieses durchdringt.

Eine erfindungsgemäße Fügevorrichtung ist ausgebildet zur Durchführung des zuvor beschriebenen Verfahrens, insbesondere als Fließloch-Schraubvorrichtung. Zweckmäßigerweise umfasst die Vorrichtung dazu eine Steuereinheit, wobei die Steuereinheit ausgebildet ist

a) zur Ausgabe und Aufnahme von Signalen betreffend die Drehzahl N, das Drehmoment M und die Eindringtiefe Z der Schraube in das Werkstück; und/oder

b) zur Ermittlung und/oder Speicherung von zeitabhängigen und/oder konstanten Prozessparametern R, N, M, F, Korrekturwerten $\alpha$, $\beta$ und Schwellwerten S, und/oder

c) zur Ermittlung und Speicherung wenigstens eines geglätteten Prozessparameters $R^*$, $R^*_{max}$ und/oder

d) zur Auswertung wenigstens eines der der vorgenannten Werte sowie zur Ansteuerung der Drehzahl N und/oder der Vorschubkraft F und/oder des Drehmoments M in Abhängigkeit eines geglätteten Prozessparameters $R^*$.

Nachfolgend soll eine Ausführungsform des erfindungsgemäßen Verfahrens anhand von Figurenbeispielen näher erläutert werden. Dabei zeigen:

Figur 1 typische Phasen eines Fließloch-Schraubprozesses;

Figur 2 die erfindungsgemäß betrachteten Prozessparameter in einer Ausführungsform der Erfindung; und

Figur 3, 4 zwei mögliche Kurvenverläufe der Prozessparameter.

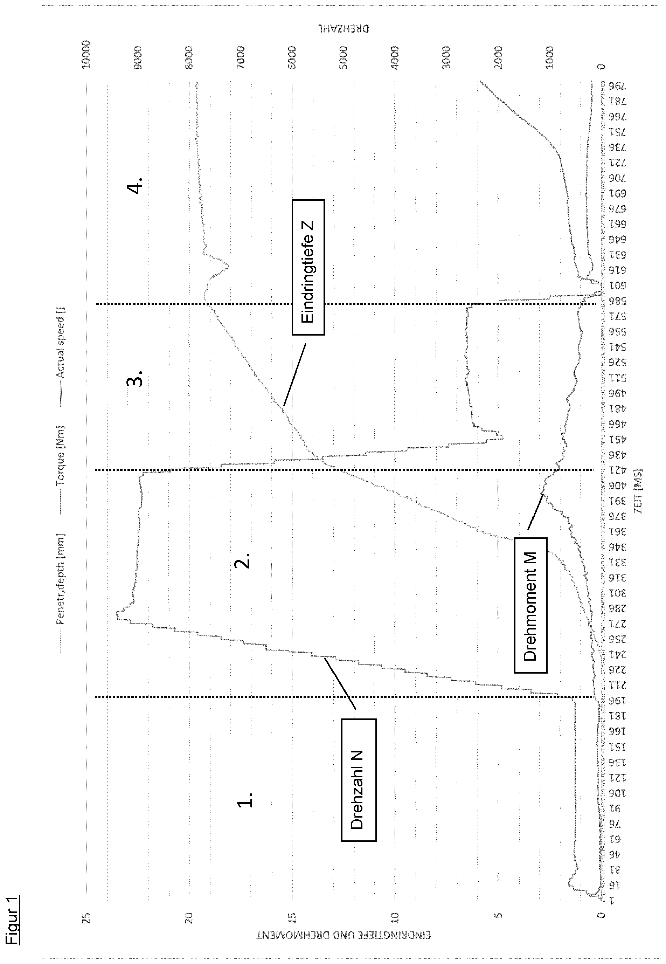

Figur 1 zeigt in vereinfachter schematischer Darstellung die einzelnen Prozessphasen eines Fließloch-Schraubprozesses. In Prozessstufe 1 setzt die Schraube auf dem Werkstück auf (Finden). In Prozessstufe 2 wird die Drehzahl der Schraube und die Vorschubkraft auf die Schraube erhöht. Das Bauteil wird dadurch erwärmt und das Metall des Werkstücks beginnt schließlich um die Schraubenspitze herum zu fließen (Durchzugformen). In Prozessstufe 3 kann die Schraube mit stark reduzierter Drehzahl und Vorschubkraft in das fließende Material des Werkstoffes eindringen. Die Eindringtiefe nimmt dabei im Wesentlichen linear zu, und die Schraube formt ein Gewinde in das Werkstück (Gewindeformen). In der 4. Prozessstufe erreicht der Schraubenkopf die Werkstückoberfläche (Kopfauflage) und die Eindringtiefe ändert sich nicht mehr signifikant. Die Schraube wird auf Endanzugsmoment angezogen (Endanzug). Der gesamte Prozess dauert in diesem Ausführungsbeispiel etwa 800 ms.

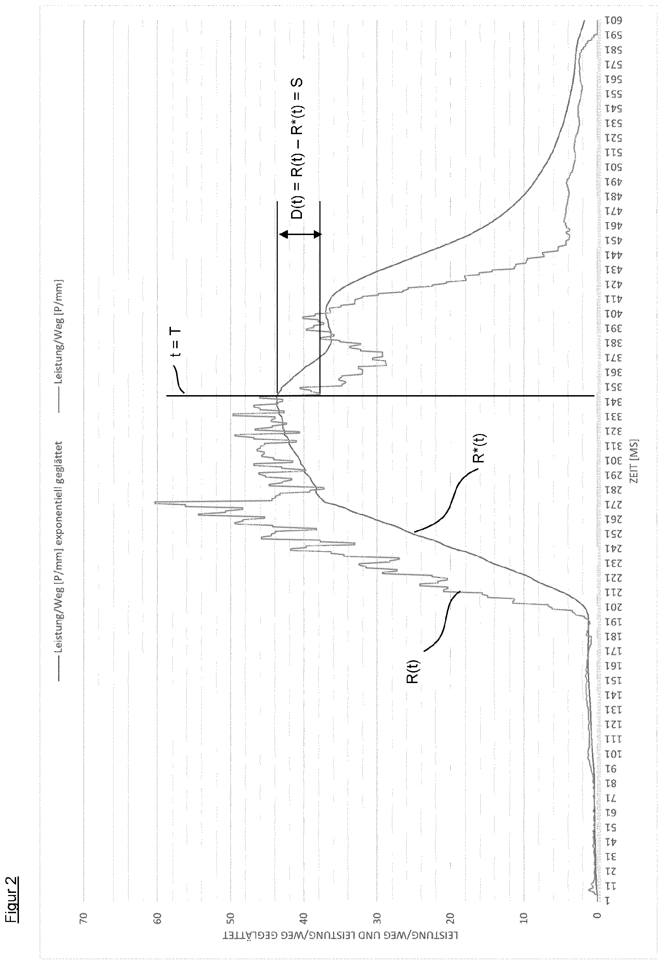

Figur 2 zeigt den Verlauf eines Prozessparameters R(t), der durch die Formel

$$R = (M \cdot N) / (Z + \beta)$$

beschrieben werden kann, und der die aus dem Drehmoment M und der Drehzahl N gebildete Leistung erfasst, bezogen auf die (um einem Summanden $\beta$ ergänzte) Eindringtiefe Z. Der Prozessparameter R(t) ist während des Prozesses mehr oder weniger starken Schwankungen unterworfen, bedingt u.a. durch Messungenauigkeiten oder das Materialverhalten der Schraube und/oder des Werkstückes. Der exponentiell geglättete Verlauf des Prozessparameters R(t) wird durch die Kurve $R^*(t)$ dargestellt. Zu erkennen ist, dass der geglättete Wert $R^*(t)$ dem Prozessparameter R(t) nachläuft. Zu jedem Zeitpunkt t lässt sich eine Differenz $D(t) = R(t) - R^*(t)$ bilden. Bis etwa zum Zeitpunkt T = 350ms ist diese Differenz entweder größer als null oder ihr Betrag ist kleiner als der Betrag eines Schwellwerts S. Zum Zeitpunkt t=T ist das Material des Werkstückes so weit aufgeweicht, dass die Schraube unter abnehmendem Drehmoment M und mit zunehmender Eindringtiefe Z beginnt, in das Werkstück einzudringen. Die auf die Eindringtiefe bezogene Leistung, also der Prozessparameter R, fällt daher in diesem Moment T deutlich ab, und zwar so weit unter den durch die geglättete Kurve prognostizierten Wert $R^*(T)$, dass die Differenz D(T) einen Schwellwert S "übersteigt" (im konkreten Fall ist der Wert der Differenz negativ und kleiner als der ebenfalls negative Schwellwert S). Dieses Phänomen wird erfindungsgemäß als Umschaltkriterium herangezogen, um die Drehzahl zu reduzieren und kontrolliert in den Prozessschritt des Gewindeformens überzugehen. Selbstverständlich lassen sich andere Prozessparameter in gleicher Weise "überwachen" und zur gezielten Veränderung dieses oder eines anderen Prozessparameters heranziehen.

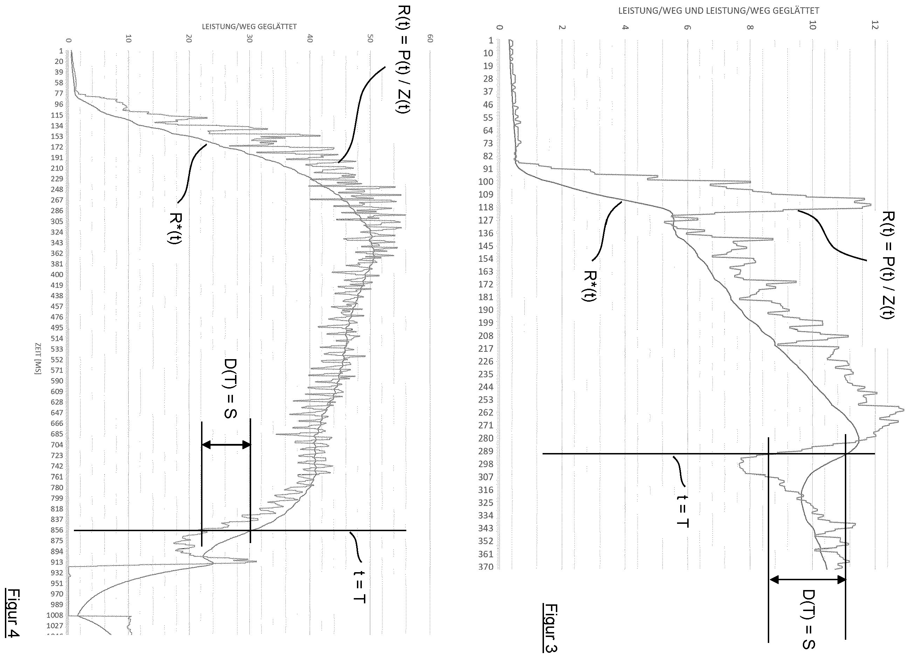

Die Figuren 3 und 4 zeigen zwei Beispielfälle für die Ausführung des erfindungsgemäßen Verfahrens. Figur 3 zeigt den Verlauf des Prozessparameters R(t) mit vergleichsweise geringen absoluten Werten. Als Umschaltkriterium wird die negative Differenz zwischen R(t) und $R^*(t)$ herangezogen, die zum Zeitpunkt t=T einen (negativen) Schwellwert (S) übertrifft. Dieser Zeitpunkt ist relativ schnell erreicht und durch den deutlichen Abfall von R gegenüber $R^*$ gut detektierbar. Figur 4 zeigt den Fall einer nur langsam in das Material eindringenden Schraube, wobei zum Zeitpunkt t=T der Prozessparameter R (t) erstmals so weit unter seinem geglätteten Wert R*(t) liegt, dass ein diesen Umstand definierender Schwellwert übertroffen wird und der Umschaltvorgang ausgelöst wird. In beiden Fällen lässt sich - trotz unterschiedlicher Werte und Verläufe des Prozessparameters R(t) - der Umschaltzeitpunkt T durch Vergleich mit der geglätteten Kurve R*(t) durch Vorgabe eines geeigneten Schwellwerts S sicher und genau ermitteln.

## Patentansprüche

1. Verfahren zur Überwachung und/oder Regelung eines Fließloch- und Gewindeformprozesses, bei dem ein Füge-Element, insbesondere eine Fließlochschraube, mit einer Drehzahl (N), mit einem Drehmoment (M) und mit einer Vorschubkraft (F) um einen Weg (Z) (Eindringtiefe) durch ein Werkstück getrieben wird, umfassend folgende Verfahrensschritte:

   a) Erfassen eines Prozessparameters (R(t));
   b) Ermittlung des geglätteten Verlaufs (R*(t)) dieses Prozessparameters (R(t));
   c) Bestimmung der Differenz (D(t)) aus dem Prozessparameter (R(t)) und seinem geglätteten Verlauf (R*(t)), $D(t) = R(t) - R^*(t)$
   d) Veränderung eines Prozessparameters (R, M, N, F...) in Abhängigkeit der Differenz (D(t)),

   wobei der erfasste und geglättete Prozessparameter ( R(t), R*(t) ) gebildet wird

   $e_1$) mit der Drehzahl (N) und dem Drehmoment (M)
   oder
   $e_2$) mit der Drehzahl (N) und dem Drehmoment (M) und der Eindringtiefe (Z) oder
   $e_3$) mit der Eindringtiefe (Z)
   oder
   $e_4$) mit der Drehzahl (N) und dem Drehmoment (M) und der Eindringtiefe (Z) und der Vorschubkraft (F),

   vorzugsweise mit der Bedingung

   $$R \sim (M \cdot N) / (Z + \beta),$$

   mit einem vorgebbaren Summanden ($\beta$).

2. Verfahren nach Anspruch 1, **dadurch gekennzeichnet, dass** es sich bei der Glättung um eine exponentielle Glättung erster oder höherer Ordnung handelt.

3. Verfahren nach Anspruch 1 oder 2, **dadurch gekennzeichnet, dass** die Veränderung des Prozessparameters (R, M, N, F...) ausgelöst wird, wenn die Differenz (D(t)) einen vorgebbaren Schwellwert (S) über- bzw. unterschreitet.

4. Verfahren nach dem vorhergehenden Anspruch, **dadurch gekennzeichnet, dass** der Schwellwert (S) gebildet wird unter Berücksichtigung eines zuvor erreichten maximalen Wertes ($R^*_{max}$) des geglätteten Parameterverlaufs (R*(t)) und eines vorgebbaren Prozesswertes ($\alpha$), vorzugsweise nach der Bedingung

   $$S = R^*_{max} / \alpha.$$

5. Verfahren nach einem der vorigen Ansprüche, **dadurch gekennzeichnet, dass** der erfasste und geglättete Prozessparameter ( R(t), R*(t) ) zusätzlich gebildet wird mit der Drehzahl (N) und/oder dem Drehmoment (M) und/oder der Vorschubkraft (F) und/oder der Eindringtiefe (Z), vorzugsweise mit der Bedingung

   $$R \sim (M \cdot N) / (Z + \beta),$$

   mit einem vorgebbaren Summanden ($\beta$).

6. Verfahren nach dem vorhergehenden Anspruch, wobei das Erreichen eines Schwellwerts $(x) \geq D(t)$ eine Veränderung der Drehzahl (N) und/oder der Vorschubkraft (F), vorzugsweise deren Reduzierung, auslöst.

7. Verfahren nach einem der vorigen Ansprüche, umfassend folgende Schritte:

a) Beaufschlagen eines Füge-Elements, insbesondere einer Fließlochschraube, mit einer Drehzahl (N) und einer Vorschubkraft (F) unter einem Drehmoment (M), um das Füge-Element durch ein Werkstück zu treiben;
b) Erfassen eines Prozessparameters (R(t)), welcher die Leistung (P), mit der das Füge-Element beaufschlagt wird, auf die Eindringtiefe (Z) bezieht, um welche das Füge-Element dabei in das Werkstück eindringt, wobei die Leistung (P) repräsentiert wird durch das Produkt aus Drehzahl (N) und Drehmoment (M), so dass der Prozessparameter (R(t)) der Bedingung

$$R(t) \sim P(t) / Z \text{ genügt, mit } P(t) = N(t) \cdot M(t)$$

c) Ermittlung des geglätteten Verlaufs (R*(t)) dieses Prozessparameters;
d) Vergleich der Differenz (D(t)) aus dem Prozessparameter (R(t)) und seinem geglätteten Verlauf (R*(t)) mit einem Schwellwert (S), um dadurch den Zeitpunkt zu ermitteln, zu dem ein vorderster Abschnitt des Füge-Elements das Werkstück durchdringt;
e) Reduzierung der Drehzahl (N), wenn die Differenz (D(t)) den Schwellwert (S) über- bzw. unterschreitet;
f) Einschrauben des Füge-Elements in das Werkstück unter Ausformung eines Gewindes im Werkstück.

8. Fügevorrichtung, insbesondere Fließloch-Schraubvorrichtung, ausgebildet zur Durchführung eines Verfahrens nach einem der vorigen Ansprüche mit einem als Fließlochschraube ausgebildeten Füge-Element.

9. Fügevorrichtung nach dem vorhergehenden Anspruch, umfassend eine Steuereinheit zur Steuerung des Verfahrens, wobei die Steuereinheit ausgebildet ist

a) zur Ausgabe und Aufnahme von Signalen betreffend die Drehzahl (N), das Drehmoment (M) und die Eindringtiefe (Z) der Fließlochschraube in das Werkstück; und
b) zur Ermittlung und/oder Speicherung von zeitabhängigen und/oder konstanten Prozessparametern (R, N, M, F), Korrekturwerten ($\alpha$, $\beta$) und Schwellwerten (S), und
c) zur Ermittlung wenigstens eines geglätteten Prozessparameters (R*, $R^*_{max}$) und
d) zur Auswertung der vorgenannten Werte sowie zur Ansteuerung der Drehzahl (N) und/oder der Vorschubkraft (F) und/oder des Drehmoments (M) in Abhängigkeit eines geglätteten Prozessparameters (R*).

**Claims**

1. Method for monitoring and/or controlling a flow drill and thread forming process by means of closed-loop control, in which method a joining element, in particular a flow drill screw, is driven with a rotational speed (N), with a torque (M) and with a feed force (F) by a distance (Z) (penetration depth) through a workpiece, comprising the following method steps:

a) detecting a process parameter (R(t));
b) determining the smoothed curve (R*(t)) of this process parameter (R(t));
c) determining the difference (D(t)) between the process parameter (R(t)) and its smoothed profile (R*(t)), D(t) = R(t) - R*(t)
d) changing a process parameter (R, M, N, F...) on the basis of the difference (D(t)),

wherein the detected and smoothed process parameter (R(t), R*(t)) is formed

$e_1$) with the rotational speed (N) and the torque (M)
or
$e_2$) with the rotational speed (N) and the torque (M) and the penetration depth (Z)
or
$e_3$) with the penetration depth (Z)
or
$e_4$) with the rotational speed (N) and the torque (M) and the penetration depth (Z) and the feed force (F),

preferably with the condition

$$R \sim (M \cdot N) / (Z + \beta),$$

with a predeterminable summand ($\beta$).

2. Method according to claim 1, **characterized in that** the smoothing is an exponential smoothing of first or higher order.

3. Method according to either claim 1 or claim 2, **characterized in that** the change in the process parameter (R, M, N, F...) is triggered if the difference (D(t)) exceeds or falls below a predeterminable threshold value (S).

4. Method according to the preceding claim, **characterized in that** the threshold value (S) is formed taking into account a previously reached maximum value ($R^*_{max}$) of the smoothed parameter curve ($R^*(t)$) and a predeterminable process value ($\alpha$), preferably according to the condition

$$S = R^*_{max} / \alpha.$$

5. Method according to any of the preceding claims, **characterized in that** the detected and smoothed process parameter (R(t), $R^*(t)$) is additionally formed with the rotational speed (N) and/or the torque (M) and/or the feed force (F) and/or the penetration depth (Z), preferably with the condition

$$R \sim (M \cdot N) / (Z + \beta),$$

with a predeterminable summand ($\beta$).

6. Method according to the preceding claim, wherein reaching a threshold value (x) $\geq$ D(t) triggers a change in the rotational speed (N) and/or the feed force (F), preferably the reduction thereof.

7. Method according to any of the preceding claims, comprising the following steps:

a) applying a joining element, in particular a flow drill screw, with a rotational speed (N) and a feed force (F) under a torque (M) in order to drive the joining element through a workpiece;
b) detecting a process parameter (R(t)) which relates the power (P) applied to the joining element to the penetration depth (Z), by which the joining element penetrates into the workpiece, wherein the power (P) is represented by the product of rotational speed (N) and torque (M), such that the process parameter (R(t)) of the condition

$$R(t) \sim P(t) / Z \text{ is sufficient, with } P(t) = N(t) \cdot M(t)$$

c) determining the smoothed curve ($R^*(t)$) of this process parameter;
d) comparing the difference (D(t)) between the process parameter (R(t)) and its smoothed curve ($R^*(t)$) with a threshold value (S) in order to thereby determine the time at which a foremost portion of the joining element penetrates the workpiece;
e) reducing the rotational speed (N) if the difference (D(t)) exceeds or falls below the threshold value (S);
f) screwing the joining element into the workpiece, forming a thread in the workpiece.

8. Joining device, in particular a flow drill screwing device, which is designed to carry out a method according to any of the preceding claims, comprising a joining element designed as a flow drill screw.

9. Joining device according to the preceding claim, comprising a control unit for controlling the method by means of open-loop control, wherein the control unit is designed

a) to output and receive signals relating to the rotational speed (N), the torque (M) and the penetration depth (Z) of the flow drill screw into the workpiece; and

b) to determine and/or store time-dependent and/or constant process parameters (R, N, M, F), correction values (a, β) and threshold values (S), and

c) to determine at least one smoothed process parameter (R*, R*max) and

d) to evaluate the aforementioned values and to actuate the rotational speed (N) and/or the feed force (F) and/or the torque (M) on the basis of a smoothed process parameter (R*).

**Revendications**

1. Procédé de surveillance et/ou de régulation d'un processus de fluoperçage et de taraudage, dans lequel un élément d'assemblage, en particulier une vis de fluoperçage, est entraîné, par une pièce, avec une vitesse de rotation (N), avec un couple (M) et avec une force d'avance (F) autour d'une course (Z) (profondeur de pénétration), comprenant les étapes de procédé suivantes :

   a) capture d'un paramètre de processus (R(t)) ;
   b) détermination de la courbe lissée (R*(t)) de ce paramètre de processus (R(t)) ;
   c) définition de la différence (D(t)) à partir du paramètre de processus (R(t)) et de sa courbe lissée (R*(t)), D(t) = R(t) - R*(t)
   d) variation d'un paramètre de processus (R, M, N, F...) en fonction de la différence (D(t)),

   dans lequel le paramètre de processus capté et lissé (R(t), R*(t)) est formé

   $e_1$) à l'aide de la vitesse de rotation (N) et du couple (M)
   ou
   $e_2$) à l'aide de la vitesse de rotation (N), du couple (M) et de la profondeur de pénétration (Z)
   ou
   $e_3$) à l'aide de la profondeur de pénétration (Z)
   ou
   $e_4$) à l'aide de la vitesse de rotation (N), du couple (M), de la profondeur de pénétration (Z) et de la force d'avance (F),
   de préférence avec la condition

$$R \sim (M \cdot N) / (Z + \beta),$$

   avec un opérande (β) prédéfinissable.

2. Procédé selon la revendication 1, **caractérisé en ce que** le lissage est un lissage exponentiel de premier ordre ou d'ordre supérieur.

3. Procédé selon la revendication 1 ou 2, **caractérisé en ce que** la variation du paramètre de processus (R, M, N, F...) est provoquée lorsque la différence (D(t)) est supérieure ou inférieure à une valeur de seuil (S) prédéfinissable.

4. Procédé selon la revendication précédente, **caractérisé en ce que** la valeur de seuil (S) est formée en prenant en compte une valeur maximale ($R^*_{max}$) préalablement atteinte de la courbe de paramètre lissée (R*(t)) et une valeur de processus (α) prédéfinissable, de préférence avec la condition

$$S = R^*_{max} / \alpha.$$

5. Procédé selon l'une des revendications précédentes, **caractérisé en ce que** le paramètre de processus capté et lissé (R(t), R*(t)) est en outre formé à l'aide de la vitesse de rotation (N) et/ou du couple (M) et/ou de la force d'avance (F) et/ou de la profondeur de pénétration (Z), de préférence avec la condition

$$R \sim (M \cdot N) / (Z + \beta),$$

avec un opérande (β) prédéfinissable.

6. Procédé selon la revendication précédente, dans lequel l'atteinte d'une valeur de seuil (x) ≥ D(t) provoque une variation de la vitesse de rotation (N) et/ou de la force d'avance (F), de préférence leur réduction.

7. Procédé selon l'une des revendications précédentes, comprenant les étapes suivantes :

   a) application, à un élément d'assemblage, en particulier une vis de fluoperçage, d'une vitesse de rotation (N) et d'une force d'avance (F) sous un couple (M), afin d'entraîner l'élément d'assemblage à travers une pièce ;
   b) capture d'un paramètre de processus (R(t)) qui rapporte la puissance (P) appliquée à l'élément d'assemblage à la profondeur de pénétration (Z) à laquelle l'élément d'assemblage pénètre alors dans la pièce, dans lequel la puissance (P) est représentée par le produit de la vitesse de rotation (N) par le couple (M), de sorte que le paramètre de processus (R(t)) satisfait la condition

$$R(t) \sim P(t) / Z, \text{ avec } P(t) = N(t) \cdot M(t)$$

   c) détermination de la courbe lissée (R*(t)) de ce paramètre de processus ;
   d) comparaison de la différence (D(t)) entre le paramètre de processus (R(t)) et sa courbe lissée (R*(t)) à une valeur de seuil (S), afin de déterminer ainsi le moment où la partie plus en avant de l'élément d'assemblage traverse la pièce ;
   e) réduction de la vitesse de rotation (N) lorsque la différence (D(t)) est supérieure ou inférieure à la valeur de seuil (S) ;
   f) vissage de l'élément d'assemblage dans la pièce pour former un filetage dans la pièce.

8. Dispositif d'assemblage, en particulier dispositif de vissage par fluoperçage, conçu pour la mise en oeuvre d'un procédé selon l'une des revendications précédentes à l'aide d'un élément d'assemblage réalisé sous la forme d'une vis de fluoperçage.

9. Dispositif d'assemblage selon la revendication précédente, comprenant une unité de commande pour la commande du procédé, dans lequel l'unité de commande est conçue

   a) pour émettre et recevoir des signaux concernant la vitesse de rotation (N), le couple (M) et la profondeur de pénétration (Z) de la vis de fluoperçage dans la pièce ; et
   b) pour déterminer et/ou enregistrer des paramètres de processus (R, N, M, F) dépendants du temps et/ou constants, des valeurs de correction (a, β) et des valeurs de seuil (S), et
   c) pour déterminer au moins un paramètre de processus lissé (R*, R*$_{max}$) et
   d) pour évaluer les valeurs susmentionnées et pour commander la vitesse de rotation (N) et/ou la force d'avance (F) et/ou le couple (M) en fonction d'un paramètre de processus (R*) lissé.

Figur 1

EP 4 102 316 B1

Figur 2

Leistung/Weg [P/mm] exponentiell geglättet    Leistung/Weg [P/mm]

t = T

$D(t) = R(t) - R^*(t) = S$

R(t)

R*(t)

LEISTUNG/WEG UND LEISTUNG/WEG GEGLÄTTET

ZEIT [MS]

EP 4 102 316 B1

12

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007024627 B3
- JP 2006123123 A